# EUROPEAN PATENT SPECIFICATION

(11) **EP 1 172 913 B1**
(45) Date of publication and mention of the grant of the patent: **19.10.2005**
(21) Application number: 01115434.1
(22) Date of filing: 27.06.2001
(51) Int. Cl.: H02G 3/30

(54) **Control unit for electrical systems with improved cable arrangement**
Steuereinheit für elektrische Anlagen mit verbesserter Kabelanordnung
Unité de contrôle pour systèmes électriques avec agencement amélioré des câbles

(30) Priority: 14.07.2000 IT GE000025 U
(43) Date of publication of application: 16.01.2002
(73) Proprietor: Bocchiotti S.p.A., 16147 Genova (IT)
(72) Inventor: Messeri, Massimo c/o Bocchiotti Società per I.E., 16121 Genova (IT)
(74) Representative: Porsia, Attilio

(56) References cited:
- DE-A- 2 546 176
- US-A- 5 788 087

## Description

The present invention relates to control units for electrical systems, and in particular to a control unit in which the arrangement of the cables within it is highly improved.

Control units for electrical systems which are marketed at present, in particular for small and medium electrical systems for domestic use, consist of a box-shaped body containing support means, commonly cross-pieces made of metal or similar materials, on which the components of the control unit are placed (DE-A-2 546 176). Said cross-pieces can be fastened directly to the bottom of the box-shaped body, or they can be mounted on support elements which are in their turn suitably connected with the bottom of said box-shaped body. The cables for the connection of the system with its elements within the control unit, as well as for other connections between said elements, usually fill the remaining room within the box-shaped body. It is obvious that their casual or untidy arrangement can result in huge problems related to the operation and maintenance of the electrical system.

It has been known for a long time about cable distribution channels applied to plant engineering systems for large electrical consumptions, such as for instance switchboards in industrial or naval plants, or in electronic systems. However, the use of this kind of channels depends on a certain room availability and with an arrangement of said room which is often not available in the control units of the aforesaid type.

The present invention therefore aims at providing a control unit in which the cable arrangement within the latter is improved, so as to simplify the connection both between the system and the elements of the control unit and between the elements of the control unit itself.

The object of the present invention is therefore a control unit for electrical systems, comprising a box-shaped body on whose bottom wall at least one cross-piece is arranged for mounting the control unit elements, said cross-piece being placed on two supports which are perpendicular to it and which are connected to said bottom wall of said box-shaped body, characterized in that at least one of said supports comprises a device for the distribution of cables within said control unit.

Said distribution device can comprise a distribution channel consisting of two series of plates suitably placed at the same distance, substantially L-shaped, located on planes which are perpendicular to the plane of the bottom wall of said box-shaped body, opposed one to the other so as to form said channel, and connected through at least a continuous element. The distribution device can be obtained as one piece with the cross-piece support, or it can be connected to said support through suitable means.

Further characteristics and advantages of the unit according to the present invention will be evident from the following detailed description of some forms of embodiment of said invention, which is carried out by way of non-limiting example with reference to the enclosed drawings, in which:
Figure 1 is a plan view of the control unit according to the present invention;
Figure 2 is an exploded perspective view of a control unit according to the present invention;
Figure 3 is a view in lateral elevation of a first form of embodiment of a device for the distribution of cables within the control unit according to the invention; and
Figure 4 is a perspective view of an execution variant of the device for the distribution of cables within the control unit according to the invention.

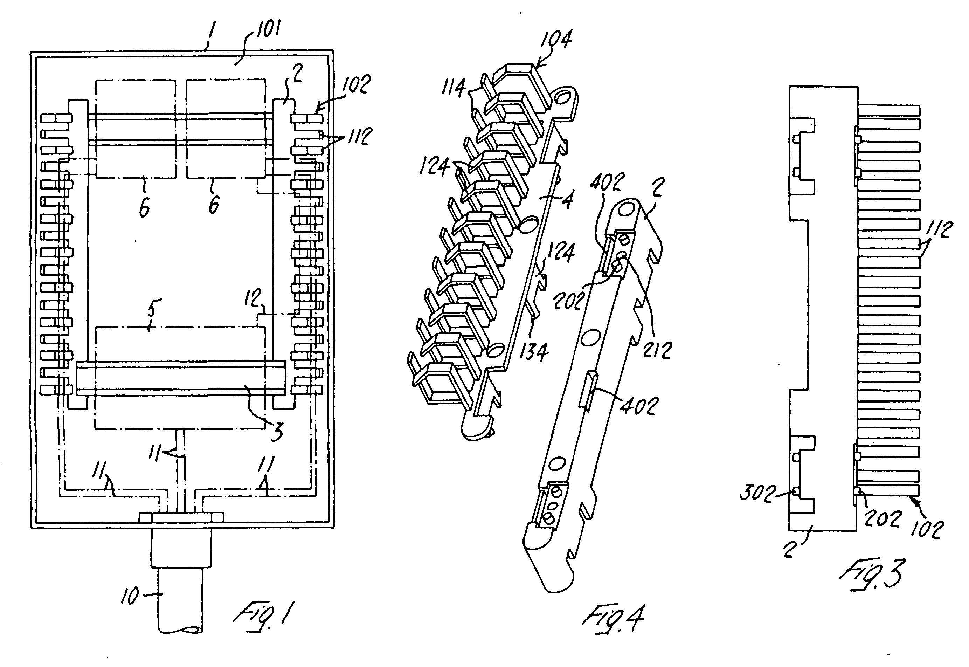

Figure 1 shows a form of embodiment of the control unit according to the present invention; the numeral 1 indicates the box-shaped body of the control unit, which is shown in this figure without its top cover. The cross-pieces 3 on which the elements, i.e. the components, 5 and 6 within the control unit are located, are positioned on the supports 2, which comprise distribution devices 102 consisting of the plates 112, for the distribution of the cables 11 coming from the cableway 10. The distribution device 102 also contains the cable 12 for the connection between the element 5 and an element 6.

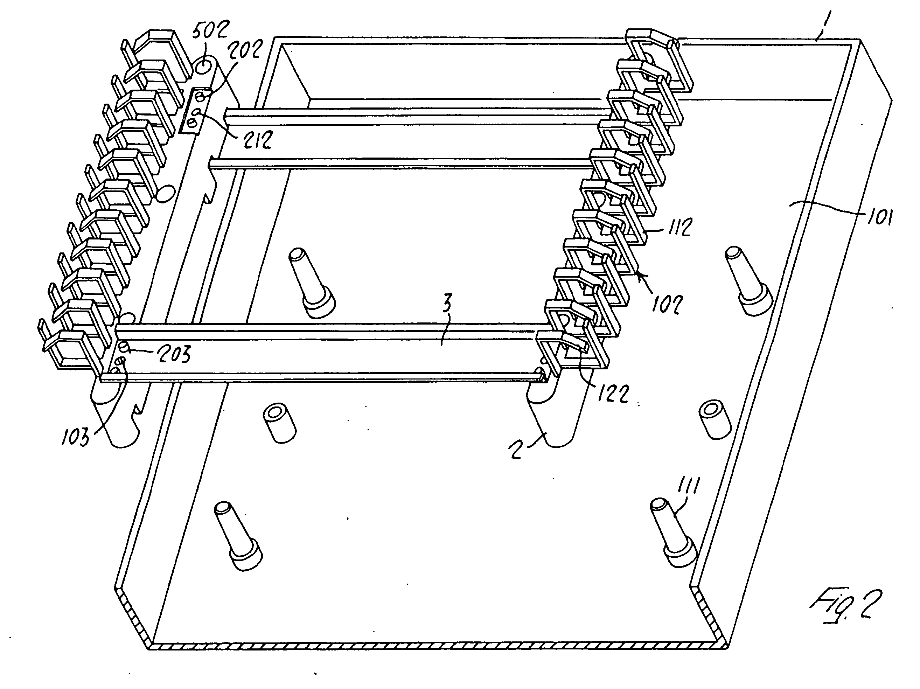

Figure 2 shows the control unit according to the invention in an exploded perspective view. The bottom wall 101 of the box-shaped body 1 contains the pegs 111 protruding towards the inside of the body 1, said pegs being coupled with the through holes 502 formed on the supports 2. The cross-pieces 3, in case of metal draw pieces, are connected on their ends with the supports 2 by introducing the pins 202 protruding from the supports 2 into the holes 203 of said cross-pieces; moreover, it is also provided for fastening means 103, screws for instance, which are inserted into the holes 212. Each support 2 further comprises a device 102 for the distribution of cables within the control unit. In the present form of embodiment said device consists of a distribution channel 102 made of two series of plates 112, 122, substantially L-shaped, which are not aligned one to the other and which are arranged on planes perpendicular to the bottom wall 101 of the body 1, and with an end connected to said support 2. Advantageously, the free end of said plates 122 is folded inside, so as to simplify the introduction of the cables into the distribution device 102, and simultaneously to ensure their positioning.

The support 2 with its distribution device 102 is shown in Figure 3, where it can be observed that the pins 302 turned towards the bottom wall 101 of the body 1 enable an alternative position for fastening the cross-pieces 3.

Figure 4 shows an execution variant of the support used in the control unit according to the present invention. In this case the support 2 is provided with longitudinal slits 402 apt to cooperate with the strips 124 protruding from the plate 4 on which the distribution device 104 is obtained, said device consisting, analogously to the above-described device 102, of two series of plates 114, 124 having the same characteristics of the plates 112, 122 described above. The strips 124 show on the lateral rims of their free ends the toothed protuberances 134 ensuring the blocking of said strips 124 within the slits 402.

The operation of the control unit for electrical systems according to the present invention will be evident from the following. As is shown in Figure 2, the cross-pieces 3 are fastened to the supports 2 in the reciprocal positions which are most suitable for the arrangement of the components 5, 6 within the control unit, and the supports 2 are in their turn connected with the bottom wall 101 of the box-shaped body 1 of the control unit; now, the components 5, 6 are positioned on the cross-pieces as shown in Figure 1, and are connected with the cables 11 of the system, and if possible one to the other for instance by means of the cable 12. The cables 11, 12 are all arranged within the distribution devices 102, thus enabling a more rational organization of the central chamber of the control unit, which simplifies installation and maintenance operations. Advantageously, the distribution devices can be carried out separately from the supports 2, as shown in the execution variant of Figure 4, though being firmly connectable to the latter.

## Claims

1. Control unit for electrical systems, comprising a box-shaped body (1) on whose bottom wall (101) at least one cross-piece (3) for mounting the components (5, 6) within the control unit is arranged, said cross-piece being located on two supports (2) which are perpendicular to it and which are connected to said bottom wall (101) of said box-shaped body (1), **characterized in that** at least one of said supports (2) comprises a device (102; 104) for distributing the cables (11, 12) within said control unit.

2. Control unit for electrical systems according to claim 1, in which said distribution device (102) is obtained as one piece together with the support (2) of the cross-piece (3).

3. Control unit for electrical systems according to claim 1, in which said distribution device (104) can be connected to said support (2) through suitable connecting means (4, 124, 402).

4. Control unit for electrical systems according to any of the claims 1 to 3, in which said distribution device comprises a distribution channel (102; 104) consisting of two series of suitably spaced plates (112, 122; 11, 124), substantially L-shaped, arranged on planes perpendicular to the plane of the bottom wall (101) of said box-shaped body (1), opposed one to the other so as to form said channel (102, 104) and connected through at least a continuous element (2; 4).

5. Control unit for electrical systems according to claim 4, in which a series of said plates (112, 114) is substantially L-shaped, whereas the opposed series (122, 124) shows its free end folded towards the inside of said channel (102, 104).

## Patentansprüche

1. Steuerungseinheit für elektrische Systeme, umfassend einen kastenförmigen Körper (1), an dessen unterer Wand (101) wenigstens ein Querträger (3) zum Befestigen der Bauteile (5, 6) innerhalb der Steuerungseinheit angeordnet ist, wobei der Querträger auf zwei Stützen (2) angeordnet ist, die zu ihm senkrecht sind und die mit der unteren Wand (101) des kastenförmigen Körpers (1) verbunden sind, **dadurch gekennzeichnet, dass** wenigstens eine der Stützen (2) eine Einrichtung (102; 104) für die Verteilung der Kabel (11, 12) innerhalb der Steuerungseinheit umfasst.

2. Steuerungseinheit für elektrische Systeme nach Anspruch 1, bei der die Verteilungseinrichtung (102) einteilig zusammen mit der Stütze (2) des Querträgers (3) ausgebildet ist.

3. Steuerungseinheit für elektrische Systeme nach Anspruch 1, bei der die Verteilungseinrichtung (104) durch geeignete Verbindungsmittel (4, 124, 402) mit der Stütze (2) verbunden werden kann.

4. Steuerungseinheit für elektrische Systeme nach einem der Ansprüche 1 bis 3, bei der die Verteilungseinrichtung einen Verteilungskanal (102; 104) aufweist, der aus zwei Reihen von in geeigneter Weise beabstandeten Platten (112, 122; 11, 124) besteht, die im Wesentlichen L-förmig sind, in Ebenen angeordnet sind, die senkrecht zu der Ebene der unteren Wand (101) des kastenförmigen Körpers (1) verlaufen, einander gegenüberliegen, so dass sie den Kanal (102, 104) bilden, und durch wenigstens ein fortlaufendes Element (2; 4) verbunden sind.

5. Steuerungseinheit für elektrische Systeme nach Anspruch 4, bei der eine Reihe der Platten (112, 114) im Wesentlichen L-förmig ist, während bei der gegenüberliegenden Reihe (122, 124) das freie Ende zum Inneren des Kanals (102, 104) zeigt.

## Revendications

1. Unité de contrôle pour systèmes électriques comprenant un corps (1) en forme de boîte sur la paroi (101) de fond duquel est disposé au moins un croisillon (3) de montage des éléments (5, 6) dans l'unité de contrôle, le croisillon étant placé sur deux supports (2) qui lui sont perpendiculaires et qui sont reliés à la paroi (101) de fond du corps (1) en forme de boîte, **caractérisée en ce qu'**au moins l'un des supports (2) comprend un dispositif (102, 104) pour répartir les câbles (11, 12) dans l'unité de contrôle.

2. Unité de contrôle pour systèmes électriques suivant la revendication 1, dans laquelle le dispositif (102) de répartition est obtenu d'une pièce ensemble avec le support (2) du croisillon (3).

3. Unité de contrôle pour systèmes électriques suivant la revendication 1, dans laquelle le dispositif (104) de répartition peut être relié au support (2) par des moyens (4, 124, 402) de liaison appropriés.

4. Unité de contrôle pour systèmes électriques suivant l'une quelconque des revendications 1 à 3, dans laquelle le dispositif de répartition comprend un canal (102 ; 104) de répartition consistant en deux séries de plaques (112, 122 ; 11, 124) à distance convenable, sensiblement en forme de L, disposées dans des plans perpendiculaires au plan de la paroi (101) de fond du corps (1) en forme de boîte, opposées l'une à l'autre de manière à former le canal (102, 104) et reliées par au moins un élément (2 ; 4) continu.

5. Unité de contrôle pour systèmes électriques suivant la revendication 4, dans laquelle une série desdites plaques (112, 114) est sensiblement en forme de L, tandis que la série (122, 124) opposée présente son extrémité libre coudée vers l'intérieur du canal (102, 104).
